(19) Europäisches Patentamt / European Patent Office / Office européen des brevets

(11) **EP 3 247 658 B1**

(12) **EUROPEAN PATENT SPECIFICATION**

(45) Date of publication and mention of the grant of the patent:
**03.09.2025 Bulletin 2025/36**

(21) Application number: **16739675.3**

(22) Date of filing: **21.01.2016**

(51) International Patent Classification (IPC):
**B65G 43/00** (2006.01)    **B65G 39/00** (2006.01)
**F16C 19/52** (2006.01)    **G01P 3/44** (2006.01)
**B65G 43/02** (2006.01)    **G01H 1/00** (2006.01)

(52) Cooperative Patent Classification (CPC):
**B65G 43/00; B65G 39/00; B65G 43/02;**
**F16C 19/527;** F16C 2326/58; G01H 1/00

(86) International application number:
**PCT/AU2016/000008**

(87) International publication number:
**WO 2016/115591 (28.07.2016 Gazette 2016/30)**

(54) **IMPROVEMENTS IN CONVEYOR AND COMPONENTS THEREFOR, MONITORING METHODS AND COMMUNICATION SYSTEMS**

VERBESSERUNGEN IN FÖRDERER UND KOMPONENTEN DAFÜR, ÜBERWACHUNGSVERFAHREN UND KOMMUNIKATIONSSYSTEME

AMÉLIORATIONS DANS UN TRANSPORTEUR ET ÉLÉMENTS POUR CE DERNIER, PROCÉDÉS DE SURVEILLANCE ET SYSTÈMES DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:    **21.01.2015  AU 2015900168**
         **18.08.2015  AU 2015903333**

(43) Date of publication of application:
**29.11.2017  Bulletin 2017/48**

(73) Proprietor: **Vayeron Pty Ltd**
**North Ryde, NSW 2113 (AU)**

(72) Inventors:
• **MOUTSOURIZ, Paul**
  **North Ryde, NSW 2113 (AU)**
• **NORRIS, Ryan**
  **North Ryde, NSW 2113 (AU)**
• **MOUSSA, David**
  **North Ryde, NSW 2113 (AU)**

(74) Representative: **Dehns**
**10 Old Bailey**
**London EC4M 7NG (GB)**

(56) References cited:
WO-A1-2010/142029    WO-A1-2011/160650
WO-A1-2012/057680    WO-A2-2015/042661
JP-A- 2011 213 440    KR-B1- 101 372 973
US-A1- 2007 118 333    US-A1- 2009 284 383

• **TOBIAS SANDSTROM: "Condition Monitoring of Ceramic Ball Bearings in an Engine Testing Dynamometer", 30 April 2014 (2014-04-30), XP055538032, Retrieved from the Internet <URL:http://www.diva-portal.org/smash/get/ diva2:907964/FULLTEXT01.pdf> [retrieved on 20190103]**

**Description**

**FIELD OF INVENTION**

The present invention relates to the field of conveyor(s), also known as belt transporters.

The present invention relates to a method of monitoring a bearing of an idler roller of a conveyor for anticipated failure, and to a conveyor system. Conveyor systems may be used in mines, quarries and/or ports which are typically hundreds of meters, or even kilometres long.

The present invention is suitable for use as applied to conveyor belts, parts and systems of a conveyor as well as methods of monitoring and communicating along conveyor(s).

**BACKGROUND ART**

Throughout this specification the use of the word "inventor" in singular form may be taken as reference to one (singular) inventor or more than one (plural) inventor of the present invention.

Conveyor belts are used in many areas of application. They are used to transport material(s) and/or good(s) between various locations in, for example without limitation, a factory, mine, quarry and/or port. Conveyors can vary in length from a few meters up to several kilometres. They often comprise a structure in which several rollers (also known as idlers) are mounted on frames. The belt of the conveyor makes contact with the rollers and as the belt moves the rollers rotate and support the belt. Movement of the belt is driven by one or more drives or pulleys located at various position(s) along the conveyor.

The inventors have realised that, the shell of the conveyor rollers which operate particularly in the quarry, mining are prone to wear. This, wear is caused by the abrasiveness of dust from the material being conveyed and/or friction with the belt which is increased by the weight of the material being carried. As the roller wears its shell become thinner and less able to support weight. Ultimately the thinning of the shell can lead to structural collapse of the roller. The potential consequences of the failed roller include:

• Damage to the belt and/or conveyor frame which can be time consuming and costly to repair;

• Delayed delivery of material being conveyed, such as loading of bulk material onto a ship in port, resulting in significant economic loss;

• Excessive temperature caused by the increased friction of the failed roller potentially leading to fires; and/or

• Possible spillage of the conveyor material due to a lack of support or holes in the belt

• Safety hazard to people on site or nearby the conveyor.

In order to mitigate the above consequences, many conveyor sites employ a system of periodic manual inspections aimed at identifying failing or failed rollers as soon as possible. This involves walking the conveyor and inspecting it for signs of failure. Sites may also measure the thickness of the roller shell by using hand-held ultrasonic equipment however, this measurement can only be performed whilst the conveyor is stopped and accordingly is often not practical.

Another current practice is to regularly measure the temperature of idlers by, for example, using a thermographic camera. The camera may identify hot idlers that have or nearly have failed. This is considered labour intensive. Because it is difficult to simultaneously monitor the temperature of all of a conveyor belt's idlers by this practice, a failed or nearly failed idler may not be detected before an undesirable consequence occurs. Furthermore, it may be considerably inconvenient and expensive to stop the conveyor and replace a particular idler that has or nearly has failed.

Another practice is early replacement of idlers to reduce the probability of idler failure. Replacement of the idler may be conveniently performed during a conveyor maintenance period that is scheduled during the life of the conveyor. It may be difficult to accurately determine the age of an idler, however, and how much longer it may last. Removing an idler too early may be wasteful. Removing an idler too late, however, may present an unacceptable risk of idler failure and an undesirable consequence.

Idler Bearing failure is also considered a major problem in the mining/conveyor industry. The current method of detecting early signs of bearing failure amongst thousands of Idlers in a conveyor system is basically via personal inspection and is not considered cost effective, erroneous as early signs of bearing failure are hard to detect and in some cases not feasible due to the in-accessible locations of certain Idlers within a conveyor system. If a failing bearing is left un-detected for a long period of time, the following one or any combination of consequences may occur:

1. The bearings may seize which may prevent the Idler from rotating, causing the conveyor to wear over time. The wear results from the moving rubber belt being dragged over the seized steel Idler shell.

2. The bearing temperature may increase significantly, creating a fire hazard

3. The bearing vibration may increase significantly, creating a noise hazard

4. Increases in bearing vibration can also create an unbalanced roller which may result in false weightometer readings.

The inventors have realised that current manual measurement, maintenance and inspection methods are time consuming, labour intensive, prone to human error, can be adhoc and are generally not of sufficient frequency.

The inventors have realised that due to the limitations of manual inspection methods, many sites only identify a problem once the roller has failed, which is already too late to fully mitigate the risk of the above listed consequences.

The inventors have also realised that due to the limitations of manual inspection methods, many sites elect to replace parts of the conveyor, such as rollers, early in an attempt to reduce failures. This may lead to other problems where, due to the complexities of tracking the age of each part of the conveyor, many sites will change out parts of the conveyor, such as rollers, as a batch regardless of the age of the individual parts or whether they are in fact worn or not. The inventors have realised that such practices do not fully utilise the life of each part, are considered wasteful and accordingly have an associated additional cost. Tobias Sandstrom: "Condition Monitoring of Ceramic Ball Bearings in an Engine Testing Dynamometer", 30 April 2014 (2014-04-30), XP055538032 discloses condition monitoring and detecting bearing failures - particularly ball-type bearings - in a test dynamometer. A method of monitoring a bearing of an idler roller of a conveyor for anticipated failure according to the preamble of claim 1 and a conveyor system according to the preamble of claim 7 are known from WO 2011/160650 A1.

It is to be appreciated that any discussion of documents, devices, acts or knowledge in this specification is included to explain the context of the present invention. Further, the discussion throughout this specification comes about due to the realisation of the inventor and/or the identification of certain related art problems by the inventor. Moreover, any discussion of material such as documents, devices, acts or knowledge in this specification is included to explain the context of the invention in terms of the inventor's knowledge and experience and, accordingly, any such discussion should not be taken as an admission that any of the material forms part of the prior art base or the common general knowledge in the relevant art in Australia, or elsewhere, on or before the priority date of the disclosure and claims herein.

## SUMMARY OF INVENTION

It is an object of the embodiments described herein to overcome or alleviate at least one of the above noted drawbacks of related art systems or to at least provide a useful alternative to related art systems.

The invention provides a method as claimed in claim 1 and a system as claimed in claim 7.

In a first example of arrangements described herein there is provided a method of and/or system for determining the relative wear of a first roller, the first roller being suitable for a conveyor system, comprising determining, a number of rotations per period (NRP) of a first roller and providing a first NRP, determining a reference NRP, determining if there is a difference between the first NRP and the reference NRP, the difference providing an indication of a relative level of wear of the first roller.

In essence, arrangements related to wear detection stem from the realization that detection of wear of a roller in a conveyor can be determined by comparing the NRP associated with a first roller with another (possibly reference or other roller NRP), and if there is a difference in the NRP, it may be considered indicative of roller wear. For example, the roller with the higher number of revolutions can be determined to be more worn than the roller to which it is compared.

In essence, arrangements related to wear detection stem from the realization that determination of the thickness of the shell of a roller can be made by calculation based on NRP and/or a known belt speed, or comparison with another known faster, new and/or slower roller.

Advantages provided by the arrangements disclosed herein comprise the following:

- Relatively real-time measurement and detection of the rollers shell thickness leading to instantaneous determination of the roller wear. This improves system reliability.

- Pre-emptive detection of roller shell wear providing opportunity to undertake preventative maintenance. This results in fewer failures.

- Ability to identify which specific rollers are worn allowing the selective replacement of worn rollers rather than rollers as a batch. This allows roller to be fully utilised leading to cost savings.

- Ability to identify the level of wear of a roller allowing the roller to be used up to the limits of its usable life, rather than changing out roller early. This allows roller to be fully utilised leading to cost savings.

- Ability to develop a wear profile of the conveyor system leading to ability to adjust and optimise the conveyor system to reduce wear. This ultimately leads to reduced wear and lower running costs.

- Ability to automatically and remotely determine conveyor roller wear requiring less labour and reducing hazards to personnel.

- 24/7 monitoring, if needed

- Wireless remote monitoring and/or notification and/or alarm

- Comparatively less labour- saves money and safer

- Can determine wear 'in operation' without stopping the conveyor - saves costly and unnecessary down time

- Relatively highly accurate measurement- visual inspection methods are relatively inaccurate.

In a second example of the arrangements described herein there is provided a module for and method of monitoring an idler. The module comprises an information system configured to generate idler information indicative of information about the idler and send the idler information so generated. The module comprises a stator for fastening to a shaft of the idler. The module comprises a rotor configured to engage with a rotatable shell of the idler. The stator and rotor are configured to cooperate to generate electricity for the information system when the rotor rotates around the shaft.

The idler information may be used to detect or predict idler failure and appropriate action taken.

In a third example of arrangements described herein there is provided a stator comprising a bush for receiving the shaft of the idler. The bush may be configured to frictionally fit the shaft of the idler. The bush may be for adapting the stator to fit the shaft of the idler. The bush may be selected from a plurality of differently configured bushes for adapting the stator to fit the shaft of the idler. The stator may comprise a bush receiving portion interlocked with the bush. The bush may have a plurality of peripheral teeth that engage a plurality of inner circumferential teeth of the bush receiving portion. The bush may be an extruded bush. The stator may be adapted to fit a variety of idlers have shafts of different diameters.

In one arrangement, the rotor may comprise a rotor body and a rotatable shell adaptor attached to the rotor body. The rotatable shell adapter may be configured to adapt the rotor to fit the rotatable shell of the idler. The rotatable shell adaptor may be selected from a plurality of differently configured rotatable shell adaptors for adapting the rotor to fit the interior of the rotatable shell of the idler. The rotatable shell adaptor may comprise a resilient periphery configured for self-biasing into an inner surface of the rotatable shell. The rotatable shell adaptor may comprise a laterally orientated sheet and a plurality of springs attached to a periphery of the laterally orientated sheet, the plurality of springs being for self-biasing into the inner surface of the rotatable shell. The rotatable shell adaptor may comprise a laterally orientated sheet having the periphery configured as a plurality of springs. The plurality of springs may comprise a plurality of flat springs. The laterally oriented sheet may be a laterally orientated sheet. The sheet may be a stamped sheet.

Consequently, the rotor may be adapted to fit a variety of idlers having shells of different inner diameters.

In an arrangement, the rotor comprises a plurality of magnets and the stator comprises a plurality of electrical coils that are configured to cooperate with the plurality of magnets for generation of the electricity for the information system when the rotor rotates around the shaft. The plurality of electrical coils may be curved around an axis of the stator. The plurality of magnets may be arranged on the rotor to be tangentially orientated with respect to the rotatable shell when the stator is so fastened to the shaft of the idler. This may allow for a more compact module that may be able to fit into more idlers, for example idlers with smaller rotatable shell diameters or greater shaft diameters.

In an arrangement, the rotor comprises an inner rotor ring and an outer rotor ring radially spaced apart from the inner rotor ring. The plurality of magnets may be disposed to generate a plurality of magnetic regions located between the inner ring and the outer ring. The stator may comprise a stator ring that is received between the inner rotor ring and the outer rotor ring and that houses the plurality of electrical coils. The plurality of magnets may be grouped in pairs, one of each pair being attached to the inner rotor ring and the other of each pair being attached to the outer rotor ring.

In an arrangement, the plurality of electrical coils align with the plurality of magnetic regions more than once every rotor rotation. Consequently, electricity may be generated simultaneously in the plurality of coils, which may increase the peak electrical power generated.

In an arrangement, the plurality of magnets may be longitudinally elongated. Alternatively or additionally, the plurality of electrical coils are longitudinally elongated. This may simplify the assembly of the module within the rotatable shell 22 as longitudinal alignment requirements may be relaxed.

In a fourth example of arrangements as disclosed herein there is provided the coils are in electrical communication with an information system.

In this fourth example, the information system comprises an antenna for transmission of the idler information. The antenna may comprise a wire antenna. Alternatively or additionally, the information system comprises a flexible printed circuit board. The flexible printed circuit board may comprise a distal portion for location external of the rotatable shell of the idler. The flexible printed circuit board may comprise a transmission portion for wired transmission of the idler information to the distal portion, the distal portion having an antenna. The flexible printed circuit board may comprise a joint adjacent the distal portion. This may allow the distal portion to be disposed exterior of the idler.

In accordance with the invention there is provided a method of monitoring an idler bearing for anticipated failure according to claim 1.

In essence, embodiments of the present disclosure related to wear detection stem from the realization that the numerical time and frequency analysis techniques can be applied internal to a roller to detect bearing failures. One advantage of deploying these techniques internal to the roller as opposed to doing these in a remote computer externally is that the amount of data that needs to be uploaded from the Idlers is reduced. Uploading large amounts of data from idlers becomes problematic when there are large numbers of rollers with very long networks as would be the case for conventional conveyors. By distributing the analysis intelligence in each idler, decisions can be made in real-time and autonomously within each idler allowing for faster response times and a resulting in a lower system cost system than would be the case as we can use more basic radios and less power.

In other words, one aspect of embodiments disclosed herein provide a method related to wear detection comprising at least some of the steps as follows:

i. We measure the rotational speed of the roller, something the smart Idler does in real-time.

ii. We use the rotational data and knowledge of the bearings geometry to calculate the failure frequencies using the formulas. The formulas calculate which frequencies will be present for particular defect types.

iii. We determine the frequency spectrum of the vibration/acoustic data using spectral processing techniques (Fourier)

iv. We analyse the energy of the spectral data (of step iii) at the calculated failure frequencies (of step ii)

v. We analyse the statistical factors to determine if the vibration/acoustic data is due to uncorrelated noise.

vi. We compare the energy with an energy threshold.

vii. If the energy content in 6. Exceeds thresholds and it is not due to uncorrelated noise (of step v) it is considered a fault.

viii. Thresholds may be derived from analysis of known good idlers, and/ or other references.

Further scope of applicability of embodiments of the present invention will become apparent from the detailed description given hereinafter. However, it should be understood that the detailed description and specific examples, while indicating preferred embodiments of the invention, are given by way of illustration only, since various changes and modifications within the scope of the claims will become apparent to those skilled in the art from this detailed description.

## BRIEF DESCRIPTION OF THE DRAWINGS

Further disclosure, objects, advantages and aspects of preferred and other embodiments of the present application may be better understood by those skilled in the relevant art by reference to the following description of embodiments taken in conjunction with the accompanying drawings, which are given by way of illustration only, and thus are not limitative of the disclosure herein, and in which:

FIG. 1 shows an idler stand having three prior art idlers.

FIG. 2 shows a perspective view of an embodiment of a module for monitoring an idler.

FIG. 3 shows a view of a section of an example of an idler in which the module of FIG. 2 is installed.

FIG. 4 shows a rear perspective view of a stator of the module of FIG. 2.

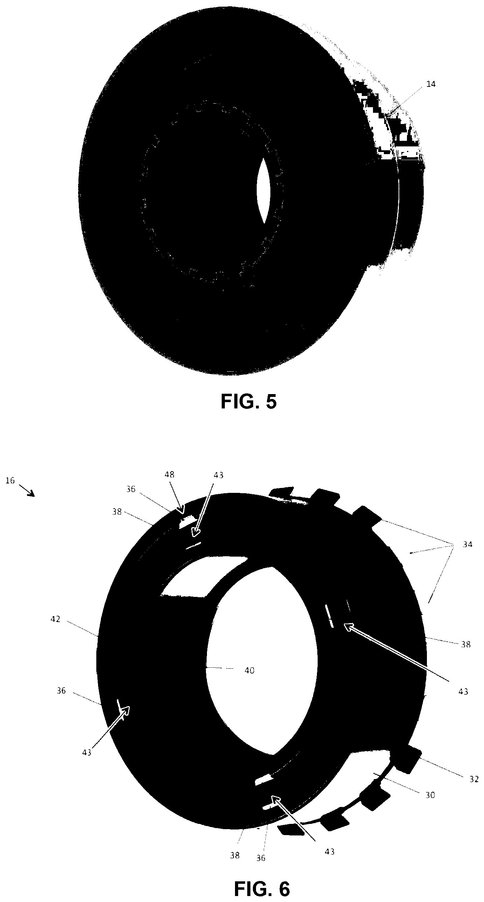

FIG. 5 shows a front perspective view of the stator of the module of FIG. 2, with a cover removed.

FIG. 6 shows a perspective view of a rotor of the module of FIG. 2.

FIG. 7 shows another perspective view of the rotor of the module of FIG. 2.

FIG. 8 shows a cutaway view of an example of an idler in which the module of FIG. 2 is installed.

FIG. 9 illustrates a roller as disclosed in co-pending application PCT/AU2014/050246.

## DETAILED DESCRIPTION

PCT/AU2014/050246 and Australian application AU2015900168 disclose an example of a conveyor, some of its components, such as rollers. With reference to these documents and the disclosure herein, in one embodiment the present invention may utilise circuitry embedded inside the roller, communicate wirelessly to an external receiver and monitor and/or may be powered via energy harvesting from rotation of the roller itself (being propelled by motion of the conveyor belt)

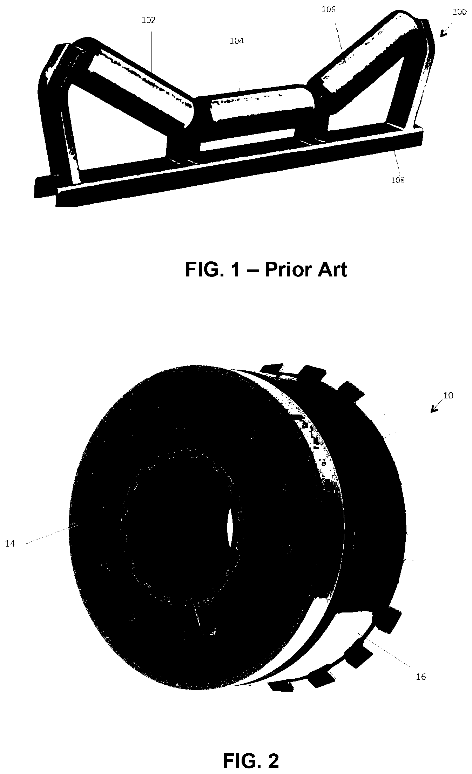

FIG. 1 shows an idler stand 100 having three prior art idlers 102, 104, 106. The idlers 102, 104, 106 are mounted to a frame 108 ready to receive the upper portion of the belt.

FIG. 2 shows an embodiment of a module for monitoring an idler, the module being generally indicated by the numeral 10.

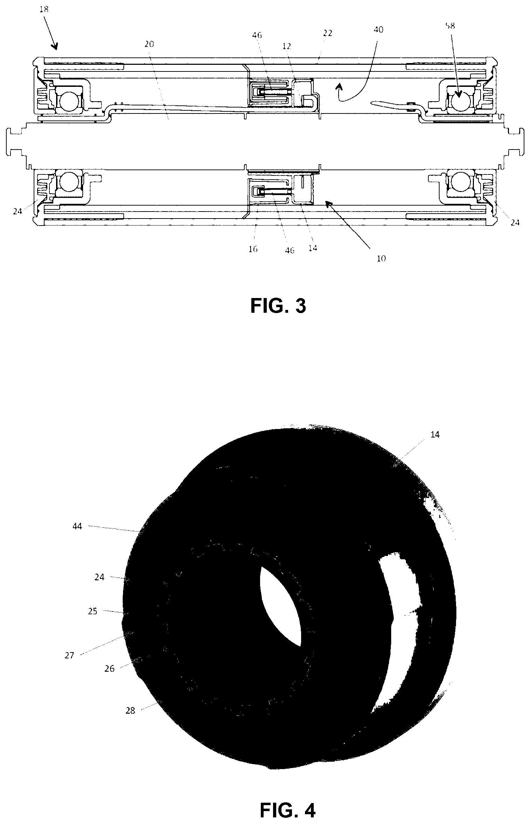

FIG. 3 illustrates a roller as disclosed in co-pending application AU2015900168. The roller 18 has a shaft 20, upon which bearings 24 support a shell 22. A stator 14 fitted to the shaft 20 cooperates with a rotor 16 fitted to the shell. Circuitry in the form of logic or information system 12 is also provided in the roller 18.

The module 10 has an information system 12 comprising electrical circuitry and/or at least one microprocessor on a printed circuit board and configured to generate idler information indicative of information about the idler 18 and send the idler information so generated. The module 10 has a stator 14 for fastening to a shaft 20 of the idler 18. FIG. 4 shows a perspective view of the stator 14. The module 10 has a rotor 16 configured to engage with a rotatable shell 22 of the idler 18. The stator 14 and the rotor 16 are configured to cooperate to generate electricity for the information system 12 when the rotor 16 rotates around the shaft 20.

In the present but not necessarily in all embodiments, the stator 14 has a bush 24 for receiving the shaft 20 of the idler 18. The bush 24 is configured to frictionally fit the shaft 20 of the idler 18. That is, during installation the bush 24 is pressed onto the shaft and when so pressed does not freely slide along the shaft. A friction fit may be otherwise known as in interference fit. Consequently, the stator 14 is fixed to the shaft 20. The bush 24 is for adapting the stator 14 to fit the shaft 20 of the idler 18. The bush 24 has been selected from a plurality of differently configured bushes for adapting the stator 14 to fit the shaft 20 of the idler 18. For example, different idlers are available that have shafts that have a greater or lesser diameter than the shaft 20 of idler 18. The bush can be selected to generally fit any shaft of generally any idler. Consequently, the module can be used with a variety of dimensionally different idlers. The stator 14 has a bush receiving portion 25 interlocked with the bush 24. The bush 24 has a plurality of peripheral teeth 26 that engage a plurality of inner circumferential teeth 28 of the bush receiving portion 25. Consequently, slippage between the bush 24 and the bush receiving portion 25 is eliminated. Alternatively, the bush may be received without engaging teeth, but fixed by a friction fit, or a thread for example.

The bush 24 may be an extruded bush. Extrusion dies may be relatively simpler and cheaper than injection moulding dies, for example, which may result in more economical bushes.

In the present but not necessarily in all embodiments, the rotor 16 has a rotor body 30 and a rotatable shell adaptor 32 attached to the rotor body 30. The shell adapter is fastened by mechanical fasteners in the form of screws however rivets, adhesive or other fastening methods may be used as suitable. The rotatable shell adapter 32 is configured to adapt the rotor 16 to fit the rotatable shell 22 of the idler. To install the rotor 16, a housing 24 is removed if not already separated from the remaining idler, and the rotor 16 inserted through an end opening of the rotatable shell 22. The periphery of the rotatable shell adapter 32 is slightly oversized for the inner diameter of the rotatable shell 22 and so engages the inner surface 40 of the rotatable shell 22. The rotor is pressed into the interior of the rotatable shell 22, in some examples (but not necessarily) with the assistance of a tool or guide. The rotatable shell adaptor 32 has been selected from a plurality of differently configured rotatable shell adaptors for adapting the rotor 16 to fit the interior of the rotatable shell 22 of the idler 18. The rotatable shell adaptor 32 has a resilient periphery configured for self-biasing into the inner surface 40 of the rotatable shell 22. The rotatable shell adaptor 32 has a laterally orientated sheet in the form of a stamped sheet of steel and a plurality of springs, for example springs 34, attached to a periphery of the laterally orientated sheet. The sheet lies at an end face of the rotor. The plurality of springs self-bias into the inner surface 40 of the rotatable shell 22 for fixing the rotor 16 to the rotatable shell 22 of the idler 18. While in the present embodiment the plurality of springs 34 are in the form of leaf springs, the springs may take any suitable form, for example coil springs.

In an alternative embodiment, the shell adapter may be in the form of a ring fitted to the circumference of the rotor body 30 or generally may take any suitable form.

The rotor 16 has a plurality of magnets 36, 38 and the stator comprises a plurality of electrical coils 46 that are configured to cooperate with the plurality of magnets 36, 38 for generation of the electricity for the information system when the rotor rotates around the shaft. In this but not necessarily in all embodiments, there are at least four coils. The plurality of electrical coils 46 may be curved around an axis of the stator, as they are in the present embodiment, and consequently match the magnetic field for improved electricity generation. The plurality of magnets 36, 38 may be arranged on the stator to be tangentially orientated with respect to the rotatable shell when the stator is so fastened to the shaft of the idler.

In the present but not necessarily in all embodiments, the rotor 16 comprises an inner rotor ring 40 and an outer rotor ring 42 radially spaced apart from the inner rotor ring 40. The plurality of magnets 36, 38 are disposed to generate a plurality of magnetic regions 43 within the space located between the inner ring 40 and the outer ring 42. The magnets 36, 38 are located in slots formed in the inner ring 40 and the outer ring 42. The stator 14 has a stator ring 44 that is received between the inner rotor ring 40 and the outer rotor ring 42 when the module 10 is assembled, and which the plurality of electrical coils 46 are housed in a plurality of coil housings 27. The plurality of magnets 36, 38 are grouped in a plurality of pairs of magnets, for example pair 48. In this but not necessarily all embodiments there are at least four pairs of magnets. One of each pair (those indicated by numeral 38) being attached to the inner rotor ring 40 and the other of each pair (those indicated by numeral 36) being attached to the outer rotor ring 42. Each of the plurality of pairs of magnets has a magnet of the pair that is opposite the other magnet of the pair. Between the magnets of each of the plurality of pairs is an air gap. Each of the plurality of pairs of magnets has a magnetic field guide comprising a ferromagnetic strip in the form of a steel strip that connects a magnet of the pair with the other magnet of the pair to form a magnetic circuit. The steel strip is attached to the rotor by adhesive, for example, to which to magnets are magnetically attached. The magnetic circuit may concentrate the magnetic field between the magnets and may increase the electricity generated within the coils. The ferromagnetic strip has a portion behind and in contact with each of the magnets, and a portion that crosses the space between the inner ring 40 and the outer ring 42.

The plurality of electrical coils 46 align with the plurality of magnetic regions 43 more than once every rotor rotation. In this embodiment, four sets of magnets align with the four coils simultaneously four times per rotation of the rotatable shell. Consequently, electricity is generated simultaneously in the plurality of coils, which may increase the peak electrical power generated. The frequency of peak electrical power increases with the number of coils and magnets. In alternative embodiments, however, each of the electrical coils may come into alignment with a coil at a different rotational orientation, which may reduce the peak electrical power generated but provide a smoother supply of electricity.

The plurality of magnets 36, 38 are longitudinally elongated, as are the plurality of electrical coils 46. While the longitudinal position of the plurality of coils and the plurality of magnets may be ideally the same, their longitudinal elongation may alleviate relative longitudinal misalignment. Consequently, the stator ring penetrating slightly too much or too little into the space between the inner rotor ring 40 and the outer rotor ring 42 may not have a significant impact on the electricity generated. This may simplify the assembly of the module within the rotatable shell 22 as longitudinal alignment requirements may be relaxed.

In an embodiment, the plurality of coils are in electrical communication with the information system 12. Electricity generated in the coils may be measured within the information system 12, or power the information system 12.

The information system 12 is configured to send the idler information. In the present embodiment the information system 12 is configured to wirelessly send the idler information, using a radio transmitter. In another embodiment, the information system is configured to send the idler information via a wire or cable. The information system 10 has a radio transmitter arranged to transmit a radio signal carrying the idler information. The idler information may be received at a remote processor, for example, at which the idler information may be presented to a user or used to activate user alerts.

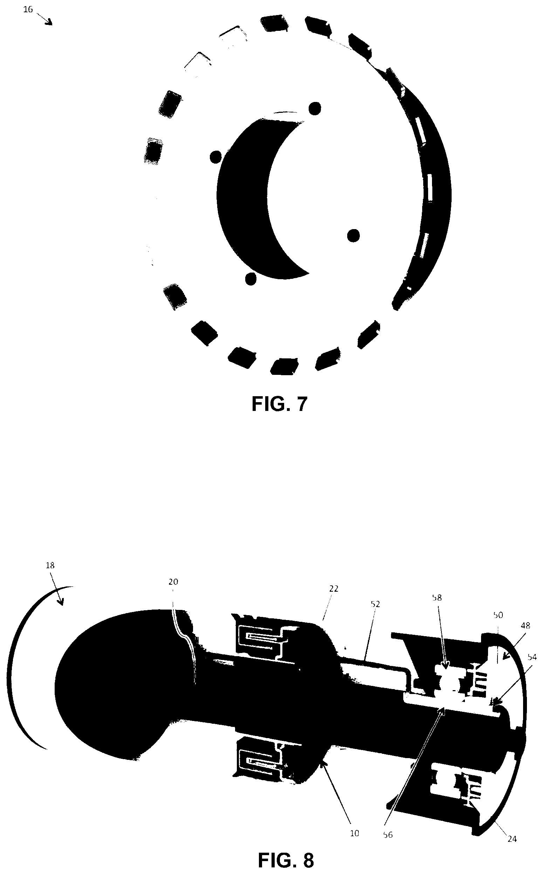

In the present embodiment, the idler shell 22 comprises steel and so is impenetrable by radio signals. As shown in FIG. 8, the shaft 20 has a slotted portion defining a longitudinal slot 56. A rotary bearing 58 is mounted on the slotted portion. The slotted portion defines a passageway located between the shaft 20 and the rotary bearing 58.

The information system 12 comprises a flexible printed circuit board 48 comprising a distal portion 50 for location external of the idler (that is external of the rotatable shell 22 and housing 24 of the idler) and a transmission portion 52 for wired transmission of the idler information to the distal portion. The distal portion 50 has an antenna for wireless transmission of the idler information to a processor remote of the idler for processing of the idler information. The flexible printed circuit board was used to go around a corner, but in an alternative, a cable could be used. The flexible printed circuit board 48 comprises a joint 54 adjacent the distal portion 50. The joint may be extended for threading of the flexible printed circuit through the passageway of the slotted portion connecting the interior and the exterior of the idler. After threading the flexible printed circuit board through the slot 56, the joint may be bent so that the distal end abuts and/or lies on the idler, in this embodiment lies an outer surface of the housing 24. The distal end 50 may be fastened to the outer surface of the housing 24 by, for example, an adhesive, clip, or generally any suitable fastener. Disposed in the slot is a seal in the form of a resilient boot, for example a rubber or silicon boot. An alternative embodiment does not have the flexible printed circuit board, but rather a wire antenna that passes through the slot 56. A distal end of the wire antenna may be fastened to the outer surface of the housing 24 by, for example, an adhesive, clip, or generally any suitable fastener.

**Information System**

The idler information may generally comprise any information about the idler. In this but not necessarily all embodiments, the idler information comprises rotation information that comprises information about the rotation of the rotatable shell 22 around the shaft 20. In the present embodiment, the rotation information comprises rotation number information comprising information about the number of rotations of the rotor 22 around the shaft 20. For example, the information system 12 may determine if the number of rotations of the shell 22 satisfies a number of rotations condition. For example, some idlers are known to the significantly more likely to fail after a threshold number, say 1 million, of rotations. If the number of rotations equals or exceeds the threshold number of rotations, then the rotation number information indicates that the number of rotations has exceeded the threshold number of rotations. This is an example of an alarm generated by the idler. Additionally or alternatively, the rotation information indicates the number of rotations of the rotor. The number of rotations of the rotor 12 may be communicated to the remote processor either directly or via a gateway, which may then store the number of rotations in an idler database, for example. The remote processor may determine if the necessary conditions are meet for an alert and subsequently may display on the electronic display an alert when the number of rotations of an idler exceeds the threshold number of rotations. The rotation information may also be used to determine the amount of available power to the idler.

The rotation information, in this but not all embodiments, comprises rotational velocity information about a rotational velocity of the shell 22. For example, the rotational velocity information in this embodiment indicates that the rotational velocity satisfies a rotational velocity condition, which in this embodiment is that the rotational velocity of the shell 22 is equal to or less than a rotational velocity threshold. This is another example of alarm generated by the idler. An idler that has failed or failing may have a very low rotational velocity or even a zero rotational velocity. The rotational velocity condition may be that the rotational velocity of the shell 22 is irregular, which may indicate a failed or failing idler. The rotational velocity may be periodically determined by the information generator and monitored for changes in the rotational velocity. Alternatively or additionally, the rotational velocity information may indicate the rotational velocity of the shell 22. Using the rotational velocity information indicating the rotational velocity of the shell 22, the remote processor may determine if a condition for an alert is satisfied. The remote processor may display on the electronic display an alert when the velocity of an idler is not what is expected, for example if the rotational velocity is equal to or less than a rotational velocity threshold or the rotational velocity is irregular.

The rotations of the shell 22 may be determined by any suitable rotation monitor. For example, the module 10 may comprise at least one of a Hall Effect sensor, an optical encoder, a proximity switch, a contact switch, a rotary potentiometer and a rotary variable differential transformer.

The information system 12 has a control circuit in the form of a microprocessor. The microprocessor has an electricity analyser configured to analyse the electricity for the generation of the rotation information. In the present but not all embodiments, the electricity analyser is defined by program instructions executed by the microprocessor. The electricity analyser is, in this embodiment, configured to detect at least one of a plurality of power peaks in the electricity and a plurality of zero power crossings in the electricity. Alternatively, the information generator may be configured to generate sample information by temporarily sampling the electricity and using the sampled information to compute a least one of the plurality of power peaks in the electricity and the plurality of zero power crossings in the electricity. A comparator may be used and the information generator may count the number of state changes of the comparator output. The information generator has a clock, which may be used to determine the rotation period and subsequently the rotational velocity.

The module 10 may have a power storage device for storing the electricity. Consequently, the module 10 may still transmit idler information for a period after the shell 22 ceases to rotate. The power storage device may be, for example, a capacitor and/or a battery.

A temperature of the idler 10 may be monitored to detect bearing failure. For example, the idler may determine when the magnitude of the temperatures exceeds programmable thresholds. The idler information may comprise temperature information about the temperature. The temperature may be that of the shaft 20 or bearing 58 or another part for example.

A module temperature sensor converts temperature produced by the Idler bearings to an electrical signal, which is processed by analogue and/or digital electronics within the information system 12. This embodiment has a negative temperature coefficient (NTC), however, a thermocouple, for example, may be used, but is more expensive and is more complex to implement.

The information system 12 is in this but not necessarily in all embodiments configured to average a plurality of temporally spaced apart temperature measurements. The information system 12 may include in the idler information temperature information derived using a temperature sensor, for example the temporally averaged temperature measurements. The information system 12 is configured to test if the temperature satisfies a temperature condition, and if so include in the idler information temperature information indicating that the temperature satisfies the temperature condition. For example, the temperature condition may be that the temperature at least one of equals and exceeds a threshold temperature. A failed or failing bearing may have an elevated temperature. Alternatively or additionally, the idler information may be indicative of the temperature. In an alternative embodiment, the temperature sensor is clamped to the shaft 20, or is on the circuit board of the information system 12.

The vibrations emitted by the bearings within the Idler 18 are monitored to detect bearing failure. Vibrational energy within specific frequency bands is measured. It is determined when the audio energy in these bands exceeds programmable thresholds. When thresholds are exceeded an alarm may be generated.

The information system printed circuit board is, in this embodiment, potted to protect it from dust, moisture, and the effects of vibration. Accordingly, a microphone may either protrude from the potting mixture or be located within an aperture, so that it is not immersed by the potting mixture. A water proof microphone may be used or alternatively, the microphone may be protected by a thin resilient boot in the form a of silicon rubber boot that allows sound to pass through but not moisture or dust. Alternate locations may include placing microphones directly under one or both bearings.

Aspects of embodiments of the disclosed invention(s) herein include:

i. A module for monitoring an idler, the module comprising an information system configured to generate idler information indicative of information about the idler and send the idler information so generated; a stator for fastening to a shaft of the idler; and a rotor configured to engage with a rotatable shell of the idler, wherein the stator and rotor are configured to cooperate to generate electricity for the information system when the rotor rotates around the shaft.

ii. A method of monitoring an idler, the method comprising the steps of providing an information system configured to generate idler information indicative of information about the idler; associating a stator with a shaft of the idler; and providing a rotor configured to engage with a rotatable shell of the idler, wherein the stator and rotor are configured to cooperate to generate information when the rotor rotates around the shaft.

iii. An idler comprising the module disclosed herein.

iv. A module wherein the stator comprises a bush for receiving the shaft of the idler.

v. A module wherein the bush is configured to frictionally fit the shaft of the idler.

vi. A module wherein the bush is for adapting the stator to fit the shaft of the idler.

vii. A module wherein the bush is selected from a plurality of differently configured bushes for adapting the stator to fit the shaft of the idler.

viii. A module wherein the stator comprises a bush receiving portion interlocked with the bush.

ix. A module wherein the bush has a plurality of peripheral teeth that engage a plurality of inner circumferential teeth of the bush receiving portion.

x. A module wherein the bush is an extruded bush.

xi. A module wherein the rotor comprises a rotor body and a rotatable shell adaptor attached to the rotor body, the rotatable shell adapter being configured to adapt the rotor to fit the rotatable shell of the idler.

xii. A module wherein the rotatable shell adaptor is selected from a plurality of differently configured rotatable shell adaptors for adapting the rotor to fit the interior of the rotatable shell of the idler.

xiii. A module wherein the rotatable shell adaptor comprises a resilient periphery configured for self-biasing into an inner surface of the rotatable shell.

xiv. A module wherein the rotatable shell adaptor comprises a laterally orientated sheet and a plurality of springs attached to a periphery of the laterally orientated sheet, the plurality of springs being for self-biasing into the inner surface of the rotatable shell.

xv. A module wherein the rotatable shell adaptor comprises a laterally orientated sheet having the periphery configured as a plurality of springs.

xvi. A module wherein the plurality of springs comprises a plurality of flat springs.

xvii. A module wherein the laterally oriented sheet is a stamped laterally orientated sheet.

xviii. A module wherein the rotor comprises a plurality of magnets and the stator comprises a plurality of electrical coils that are configured to cooperate with the plurality of magnets for generation of the electricity for the information system when the rotor rotates around the shaft.

xix. A module wherein the plurality of electrical coils are curved around an axis of the stator.

xx. A module wherein the plurality of magnets are arranged on the rotor to be tangentially orientated with respect to the rotatable shell when the stator is so fastened to the shaft of the idler.

xxi. A module wherein the rotor comprises an inner rotor ring and an outer rotor ring radially spaced apart from the inner rotor ring and the plurality of magnets are disposed to generate a plurality of magnetic regions located between the inner ring and the outer ring, and the stator comprises a stator ring that is received between the inner rotor ring and the outer rotor ring and that houses the plurality of electrical coils.

xxii. A module wherein the plurality of magnets are grouped in pairs, one of each pair being attached to the inner rotor ring and the other of each pair being attached to the outer rotor ring.

xxiii. A module wherein the plurality of electrical coils align with the plurality of magnetic regions more than once every rotor rotation.

xxiv. A module wherein the plurality of magnets are longitudinally elongated.

xxv. A module wherein the plurality of electrical coils are longitudinally elongated.

xxvi. A module wherein the coils are in electrical communication with the information system.

xxvii. A module wherein the information system comprises a flexible printed circuit board comprising a distal portion for location external of the rotatable shell of the idler and a transmission portion for wired transmission of the idler information to the distal portion, the distal portion having an antenna.

xxviii. A module wherein the flexible printed circuit board comprises a joint adjacent the distal portion.

It will be appreciated that some embodiments may have some of the following advantages:

• The idler information may be used to detect or predict idler failure.

• The module can be relatively simply adapted for modules having various shaft outer diameters and shell inner diameters.

• The effect of misalignment of the stator to the rotor has a relatively small effect on the electricity generated

• Alignment of the plurality of coils with the plurality of magnets may increase the power available.

• The longitudinal elongation of the plurality of magnets and/or the plurality of coils may reduce the effect of misalignment of the rotor and stator on electricity generation.

• The joint on the flexible printed circuit board may facilitate the location of an aerial external of the idler.

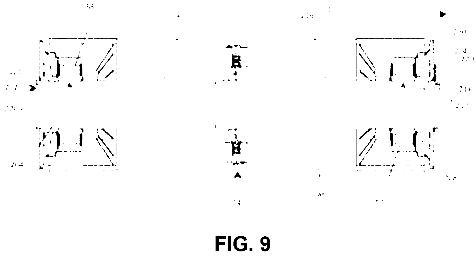

FIG. 9 illustrates a roller as disclosed in co-pending application PCT/AU2014/050246. The roller 10 has steel shell 16 and a shaft 86 into which a slot 210 is provided enabling an aerial lead 216 to pass under the bearing 89 and connect with antenna 214. This illustrates one embodiment of how a circuit provided internal of each roller may be configured to communicate with the 'outside world'.

In an embodiment of the present invention, the roller of FIG. 2 has at least one antenna provided and configured similar to that disclosed in FIG. 3.

## Shell Wear Detection

The wearing out of conveyor Roller shell is considered a problem in the mining/conveyor industry. A prior art method of measuring and detecting shell wear involves measuring the shell thickness of rollers using ultrasonic means. This method requires the conveyor to be stopped - which is undesirable, is labour intensive and in some cases is not feasible due to some roller not being easily physically accessed. A roller that is worn down, but which is not detected, may ultimately experience shell collapse, which in turn can cause costly damage to the conveyor belt, and costly conveyor down time.

The inventors have realised that destructive shell wear may be avoided if the shell thickness for each Roller in the system is monitored, and in a manner which will allows early signs of shell wear to be detected. The inventors have also realised that it may be feasible to have one or more (preferably each) roller having the capability of autonomously monitoring and detecting early signs of shell wear.

The inventors have devised at least one method to monitor shell wear. In this regard, the inventors have realised that the rotational speed of a Roller is relatively directly proportional to the outer diameter of the Roller shell. As the outer shell of the Roller begins to wear down, the speed of the roller will increase or conversely, the number of rotations per period (NRP) will increase. The NRP measured by each Roller will be compared to the NRP of another Roller which is derived using any one or any combination of the following different methods:

1. Comparing a relatively slow Roller to a relatively fast Roller - for example statistically find the average of the lowest NRP among a number of Rollers in a conveyor system and use this NRP as a baseline for determining what may be a 'threshold'. If a Roller is to be considered 'worn', the NRP will be higher than this threshold.

2. Comparing a Roller NRP to the NRP of a Roller known to be significantly newer i.e. a 'known new' Roller should have less total number of rotations NRP as its shell should not be worn and thus NRP of a newer Roller may be considered a reference for a Roller not significantly worn.

3. Comparing a Roller NRP to the NRP of a Roller with a known shell diameter measured from an external measuring device.

4. A Rollers NRP may be compared to the NRP of a Roller or set of rollers which are known to be at the beginning of their operational lifetime (maximum shell thickness).

5. A Roller may be compared to the expected NRP, which is calculated from the measured real-time belt speed (provided by the conveyor system) and known design diameter of a new Roller.

6. The NRP is communicated to an external processor which determines the level of wear by comparing a selected roller NRP with the NRP of one or more other rollers to determine relative wear.

7. The NRP may be the calculated by comparing a selected roller NRP with the NRP of a known to be 'relatively unworn' roller based on a known conveyor belt speed and the dimensions of an unworn roller.

8. The NRP of a selected roller may be determined based on a rotational count and/or count of pulses as herein disclosed, and a known belt speed and/or a real-time clock providing a time interval over which to calculate NRP or to make a comparison of NRP.

If the Rollers NRP is higher than the compared NRP by some pre-defined threshold, the Smart-Roller in question may be flagged as having a shell wear fault. The relative shell thickness (measure of shell wear) may also be reported for diagnostics and maintenance scheduling purposes.

False indicators of shell wear due to the rotational variations produced from events such as belt skipping may be significantly reduced by taking RPM variations and power loss into account which are both measured by the system, as well as ignoring the rotational count if it is not within a suitable NRP threshold band.

One or more suggested implementations may be provided, and using the roller as disclosed in for example PCT/AU2014/050246 and/or Australian application AU2015900168. The number of rotations per period is considered contingent on being able to count the rotations per revolution of the Roller and be able to measure the rotations relative to time. This may be achieved for example by embedding electronics internal to the roller and implementing one or any combination of the following methods:

1. An AC current pulse may be produced each time a rotor magnet passes a stator coil. The pulses are counted to provide NRP.

2. The AC current pulse may be converted to a digital pulse which is monitored by a microcontroller embedded within the roller. The pulses are counted to provide NRP.

3. The microcontroller handles the conversion of digital pulses to a Roller rotation count, which is proportional to the number of Coils and Magnets per rotation of a Roller.

4. The microcontroller has an associated real-time clock which may be used in conjunction with the number to digital pulses measured to convert that number of pulses to a number of rotations per period (NRP).

5. The NRP is communicated to an external processor which determines the level of wear by comparing its NRP with the NRP of other rollers to determine relative wear, or by comparing the NRP with the calculated NRP of an unworn roller based on a known conveyor belt speed and the dimensions of an unworn roller.

6. Alternatively, the processor in 4 may communicate only the rotational count to an external processor/s in 5 which can calculate the NRP using its own real-time-clock in order to determine shell wear.

Alternative methods of measuring rotating speed may be used and or in combination with the embodiments described herein, as such mechanical switch, optical, Hall Effect sensor and / or other means as would be known to a skilled person.

Further aspects of embodiments of the disclosed invention(s) herein include:

a. A method of determining the relative wear of a first roller, the first roller being suitable for a conveyor system, the method comprising the steps of determining, a number of rotations per period (NRP) of a first roller and providing a first; determining a reference NRP; and determining if there is a difference between the first NRP and the reference NRP, the difference providing an indication of a relative level of wear of the first roller.

b. A method wherein the relative wear is of an outer shell of the first roller.

c. A method wherein reference NRP is the NRP of a roller known to be relatively unworn.

d. A method wherein reference NRP is calculated using a measurement of conveyor belt speed of the conveyor system and/or the known dimensions of a selected unworn roller.

e. A method comprising the further step of indicating the first roller is worn due to having higher NRP with respect to the reference NRP.

f. A method wherein electronics within a roller provides a basis for measuring the rotational count of the roller for the purposes of determining NRP.

g. A method wherein the NRP is provided by any or any combination of:

- an AC current pulse is produced each time a rotor magnet passes a stator coil and the pulses are counted to provide NRP;

- an AC current pulse of step (a) is converted to a digital pulse which is monitored by a microcontroller and the pulses are counted to provide NRP.

- A processor handles the conversion of digital pulses of step (b) to an Roller rotation count, which is proportional to the number of Coils and Magnets per rotation of an Roller.

- A processor has a real-time clock which is used in conjunction with the number to digital pulses measured in step (b) and/or step (c) and converted to a number of rotations per period (NRP).

h. A method wherein NRP of a roller is communicated to an external processor for determining the difference.

i. A method whereby the rotational count of a roller is communicated to an external processor for the purposes of determining the difference.

j. A system adapted to determine the relative wear of a first roller, the first roller being suitable for a conveyor system, the system comprising first logic means for determining a number of rotations per period (NRP) of a first roller and providing a first NRP, second logic means for determining a reference NRP, and third logic means adapted to calculate if there is a difference between the first NRP and the reference NRP, the difference providing an indication of a relative level of wear of the first roller.

k. A system wherein the relative wear is of an outer shell of the first roller.

l. A system wherein reference NRP is the NRP of a roller known to be relatively unworn.

m. A system wherein reference NRP is calculated using a measurement of conveyor belt speed of the conveyor system and /or the known dimensions of a selected unworn roller.

n. A system wherein the first NRP is transmitted to a processor external to the Roller.

o. A system wherein the reference NRP is calculated by or transmitted to an external processor.

p. A system and adapted to perform the method(s) as disclosed herein.

q. A system further comprising an alarm associated with a determination of at least one 'worn' roller.

r. A non-transitory computer readable storage medium having a computer program stored therein, wherein the program, when executed by a processor of a computer, causes the computer to execute the steps as disclosed in any method disclosed herein.

## Bearing Failure Detection

As noted above, idler bearing failure is considered a major problem in the mining/conveyor industry. The current method of detecting early signs of bearing failure is considered prone to error and/or not cost effective.

It is considered advantageous to monitor idler(s), and in this regard, the hazardous consequences of bearing failure may be avoided if each Idler in a conveyor system is preferably continuously or periodically monitored, and which may allow early signs of bearing failure to be detected.

A bearing consists predominately of three parts. An outer race, inner race and rolling elements. If any of these three parts form a defect, then a transient oscillatory vibration will be produced when a rolling element passes over the defect. Considering that the ball bearing is rotating at a set rotational speed, the rolling elements will pass over the defect periodically, creating energy at specific frequencies. Due to the periodic nature of bearing defects and the location of the defects, several different bearing failure frequencies may be defined and frequency analysis techniques may be used to measure the spectral energy at these failure frequencies. Bearing defects may also produce multiple harmonics, side bands and even undefined frequencies as the size and shape of the defect becomes larger.

A preferred feature of this aspect of invention is that bearing failure detection analysis (or the possibility thereof) is performed internal to the roller and ideally (but not mandatory) in real-time using an internal vibration and acoustic sensor, rotational speed sensor and/or processor.

An advantage is that failure detection is ongoing/automatic and in real-time and conducted whilst the idler is in operation (no down time) without or reducing hazard to personnel (remote).

## Bearing Defect Frequencies

The four failure frequencies (Units in Hz) for a bearing of specific geometry are defined as follows:

1. FTF - Fundamental train frequency

$$FTF - \frac{1}{2}f_r(1 - \frac{B_d}{P_d}cos\beta) \qquad \text{Equation 1}$$

2. BSF - Ball spin frequency

$$BSF = \frac{P_d}{B_d}f_r[1 - (\frac{B_d}{P_d}cos\beta)^2] \qquad \text{Equation 2}$$

3. BPFO - Ball pass frequency of outer rate

$$BFPO = \frac{n}{2}f_r(1 - \frac{B_d}{P_d}cos\beta) \qquad \text{Equation 3}$$

4. BPFI - Ball pass frequency of inner race

$$BPFI = \frac{n}{2}f_r(1 + \frac{B_d}{P_d}cos\beta) \qquad \text{Equation 4}$$

Where the following bearing parameters above are defined as follows:

$n$ - *Number of balls or rollers*

$f_r$ - *Rotational frequency of bearing*

$B_d$ - *Ball diameter*

$P_d$ - *Pitch diameter*

$\beta$ - *Contact angle*

Note: that the failure frequencies may also include all harmonics of the frequencies calculated by equations 1 to 4.
In order to find the value of one or more of the above failure frequencies, parameters unique to the bearings mechanical characteristics and parameters for example pre-programmed in factory or over the radio network associated with the idler system and/or measured in the operating system of the present invention can be used.
The spectral energy at a failure frequency will have measurable magnitude for a new Idler operating under nominal load conditions. This magnitude may be used to set a threshold for normal and conversely faulty operation of the bearing. A defect in the bearing will cause the spectral energy to increase at at-least one of the failure frequencies. By comparing this energy with a set threshold it is possible to generate a fault alarm.

**Statistical Defect Signature**

It is important to note that an increase in system noise (e.g. increase in vibration on the conveyor system) can increase the energy at the failure frequencies, potentially resulting in a false fault alarm.
In order to minimise false alarms, it is necessary to analyse signals to determine if the energy at the failure frequencies is due to system noise or a failing bearing.
In the case of system noise the magnitude of the time domain signal tends to be normally distributed and energy is distributed evenly across the frequency spectrum.
In the case of a bearing defect the magnitude of the signal is not normally distributed in the time domain and energy is not distributed evenly across the frequency spectrum.
By calculating the following statistical parameters, it is possible to determine the distribution of a signal in the time domain and thus differentiate between noise and faults:

1. Crest Factor

2. Skew

3. Excess Kurtosis

By combining the above statistical information and the energy content at the failure frequencies in a weighted sum, it is possible to produce a single value which can be used to trigger a fault alarm. The weights in the sum are determined statistically through extensive and numerous laboratory experiments and are chosen to minimise sensitivity to noise and maximise sensitivity to bearing fault conditions.

**Frequency Analysis**

In order to extract the frequency failure signature's and spectral energy content as disclosed herein, the envelope of the vibration and acoustic data must be transformed into the frequency domain using either two methods:

1. Perform a fast Fourier transform on a batch of vibration data to extract the spectral data

2. Perform a running goertzel filter (Bandpass filter) on real-time data to extract the spectral data

**Adaptive Frequency Search**

The frequency failure signatures are directly proportional to the rotational speed of the Idler. The Smart-Idler as disclosed herein has the ability to measure the Idler's rotational speed in real-time which is used to adapt the frequency searching algorithm to track the correct frequency failure signatures.

While this invention has been described in connection with specific embodiments thereof, it will be understood that it is capable of further modification(s) within the scope of the appended claims.

As the present invention may be embodied in several forms without departing from the scope of the appended claims, it should be understood that the above described embodiments are not to limit the present invention unless otherwise specified, but rather should be construed broadly within the scope of the invention as defined in the appended claims. The described embodiments are to be considered in all respects as illustrative only and not restrictive.

Various modifications and equivalent arrangements are intended to be included within scope of the appended claims. Therefore, the specific embodiments are to be understood to be illustrative of the many ways in which the principles of the present invention may be practiced. In the following claims, means-plus-function clauses are intended to cover structures as performing the defined function and not only structural equivalents, but also equivalent structures. For example, although a nail and a screw may not be structural equivalents in that a nail employs a cylindrical surface to secure wooden parts together, whereas a screw employs a helical surface to secure wooden parts together, in the environment of fastening wooden parts, a nail and a screw are equivalent structures.

It should be noted that where a communication device is described that may be used in a communication system, unless the context otherwise requires, and should not be construed to limit the present invention to any particular communication device type. Thus, a communication device may include, without limitation, a bridge, router, bridge-router (router), switch, node, or other communication device, which may or may not be secure.

Various embodiments of the invention may be embodied in many different forms, including computer program logic for use with a processor (e.g., a microprocessor, microcontroller, digital signal processor, or general purpose computer and for that matter, any commercial processor may be used to implement the embodiments of the invention either as a single processor, serial or parallel set of processors in the system and, as such, examples of commercial processors include, but are not limited to Merced™, Pentium™, Pentium II™, Xeon™, Celeron™, Pentium Pro™, Efficeon™, Athlon™, AMD™ and the like), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof. In an exemplary embodiment of the present invention, predominantly all of the communication between users and the server is implemented as a set of computer program instructions that is converted into a computer executable form, stored as such in a computer readable medium, and executed by a microprocessor under the control of an operating system.

Computer program logic implementing all or part of the functionality where described herein may be embodied in various forms, including a source code form, a computer executable form, and various intermediate forms (e.g., forms generated by an assembler, compiler, linker, or locator). Source code may include a series of computer program instructions implemented in any of various programming languages (e.g., an object code, an assembly language, or a high-level language such as Fortran, C, C++, JAVA, or HTML. Moreover, there are hundreds of available computer languages that may be used to implement embodiments of the invention, among the more common being Ada; Algol; APL; awk; Basic; C; C++; Conol; Delphi; Eiffel; Euphoria; Forth; Fortran; HTML; Icon; Java; Javascript; Lisp; Logo; Mathematica; MatLab; Miranda; Modula-2; Oberon; Pascal; Perl; PL/I; Prolog; Python; Rexx; SAS; Scheme; sed; Simula; Smalltalk; Snobol; SQL; Visual Basic; Visual C++; Linux and XML.) for use with various operating systems or operating environments. The source code may define and use various data structures and communication messages. The source code may be in a computer executable form (e.g., via an interpreter), or the source code may be converted (e.g., via a translator, assembler, or compiler) into a computer executable form.

The computer program may be fixed in any form (e.g., source code form, computer executable form, or an intermediate form) either permanently or transitorily in a tangible storage medium, such as a semiconductor memory device (e.g, a RAM, ROM, PROM, EEPROM, or Flash-Programmable RAM), a magnetic memory device (e.g., a diskette or fixed disk), an optical memory device (e.g., a CD-ROM or DVD-ROM), a PC card (e.g., PCMCIA card), or other memory device. The computer program may be fixed in any form in a signal that is transmittable to a computer using any of various communication technologies, including, but in no way limited to, analog technologies, digital technologies, optical technologies, wireless technologies (e.g., Bluetooth), networking technologies, and inter-networking technologies. The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality where described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL). Hardware logic may also be incorporated into display screens for implementing embodiments of the invention and which may be segmented display screens, analogue display screens, digital display screens, CRTs, LED screens, Plasma screens, liquid crystal diode screen, and the like.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM or DVD-ROM), or other memory device. The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies. The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

"Comprises/comprising" and "includes/including" when used in this specification is taken to specify the presence of stated features, integers, steps or components but does not preclude the presence or addition of one or more other features, integers, steps, components or groups thereof. Thus, unless the context clearly requires otherwise, throughout the description and the claims, the words 'comprise', 'comprising', 'includes', 'including' and the like are to be construed in an inclusive sense as opposed to an exclusive or exhaustive sense; that is to say, in the sense of "including, but not limited to".

## Claims

1. A method of monitoring a bearing (58) of an idler roller (102, 104, 106) of a conveyor for anticipated failure, the method being **characterised by** the steps of:

   measuring the rotational speed of the idler roller;
   determining one or more failure frequencies for the least one bearing (58) according to any one or any combination of the following equations:

$$FTF - \frac{1}{2}f_r(1 - \frac{B_d}{P_d}cos\beta);$$

$$BSF = \frac{P_d}{B_d}f_r[1 - (\frac{B_d}{P_d}cos\beta)^2];$$

$$BFPO = \frac{n}{2}f_r(1 - \frac{B_d}{P_d}cos\beta);$$

   and

$$BPFI = \frac{n}{2}f_r(1 + \frac{B_d}{P_d}cos\beta);$$

wherein the preceding bearing parameters are defined as follows:

FTF is fundamental train frequency;
BSF is ball spin frequency;
BPFO is ball pass frequency of outer rate;
BPFI is ball pass frequency of inner race;
n is number of balls or rollers;
$f_r$ is rotational frequency of the bearing;
$B_d$ is ball diameter;
$P_d$ is pitch diameter; and
$\beta$ is contact angle;

the method further comprising:

determining the frequency spectrum of the vibration/acoustic data of the bearing by measuring the vibration or acoustic characteristics of the bearing and transforming the vibration and acoustic signals into spectral energy using one of two methods:

a. performing a fast fourier transform on vibration data to extract the spectral data; or
b. performing a running goertzel filter or Bandpass filter on real time data to extract the spectral data; and

determining if the monitored bearing has a change in magnitude of the spectral energy at the calculated failure frequencies.

2. A method as claimed in claim 1, further comprising the step of initiating an alarm in response to a determined change in magnitude of the spectral energy at the failure frequencies.

3. A method as claimed in claim 2, wherein the step of determining a threshold for triggering an alarm is determined by comparison the spectral energy at a failure frequency of a new bearing.

4. A method as claimed in claim 2, wherein statistical analysis is used to ascertain if the change in the spectral energy at a failure frequency is due to a bearing defect rather than a stationary signal.

5. A method as claimed in claim 1, wherein a plurality of bearings are monitored to determine an change in magnitude of the spectral energy at least one of the failure frequencies.

6. A method as claimed in claim 1, wherein the change is an increase.

7. A conveyor system comprising:

a first idler roller (102, 104, 106) comprising at least one bearing;
a rotational speed sensor;
computational logic; and
a signal processor;
wherein the rotational speed sensor is adapted to measure the rotational speed of the idler roller (102, 104, 106);
wherein the computational logic is adapted to determine at least one or more failure frequencies for the at least one bearing according to any one or any combination of the following equations:

$$FTF - \frac{1}{2}f_r(1 - \frac{B_d}{P_d}cos\beta);$$

$$BSF = \frac{P_d}{B_d}f_r[1 - (\frac{B_d}{P_d}cos\beta)^2];$$

$$BFPO = \frac{n}{2}f_r(1 - \frac{B_d}{P_d}cos\beta);$$

and

$$BPFI = \frac{n}{2}f_r(1 + \frac{B_d}{P_d}cos\beta);$$

wherein the preceding bearing parameters are defined as follows:

FTF is fundamental train frequency;
BSF is ball spin frequency;
BPFO is ball pass frequency of outer rate;
BPFI is ball pass frequency of inner race;
n is number of balls or rollers;
$f_r$ is rotational frequency of the bearing;
$B_d$ is ball diameter;
$P_d$ is pitch diameter; and
$\beta$ is contact angle;

and wherein the signal processor is adapted to:

determine the frequency spectrum of the vibration/acoustic data of the bearing by measuring the vibration or acoustic characteristics of the bearing and transforming the vibration and acoustic signals into spectral energy using one of two methods:

a. performing a fast fourier transform on vibration data to extract the spectral data; or
b. performing a running goertzel filter or Bandpass filter on real-time data to extract the spectral data; and

determine if the monitored bearing has a change in magnitude of the spectral energy at the calculated one or more failure frequencies.

## Patentansprüche

1. Verfahren zum Überwachen eines Lagers (58) einer Bandrolle (102, 104, 106) eines Förderers auf vorzeitigen Schaden, wobei das Verfahren durch folgende Schritte gekennzeichnet ist:

Messen der Rotationsgeschwindigkeit der Bandrolle;
Bestimmen von einer oder mehreren Schadfrequenzen des mindestens einen Lagers (58) gemäß einer oder einer Kombination der nachstehenden Gleichungen:

$$FTF - \frac{1}{2}f_r(1 - \frac{B_d}{P_d}cos\beta);$$

$$BSF = \frac{P_d}{B_d}f_r[1 - (\frac{B_d}{P_d}cos\beta)^2];$$

$$BFPO = \frac{n}{2}f_r(1 - \frac{B_d}{P_d}cos\beta);$$

und

$$BPFI = \frac{n}{2}f_r(1 + \frac{B_d}{P_d}cos\beta);$$

wobei die vorstehenden Lagerparameter folgendermaßen definiert sind:

FTF ist Stoßgrundfrequenz;
BSF ist Kugelrollfrequenz;
BPFO ist Kugelpassfrequenz im Außenring;
BPFI ist Kugelpassfrequenz im Innenring;
n ist Anzahl der Kugeln oder Rollen;
$f_r$ ist Rotationsfrequenz des Lagers;
$B_d$ ist Kugeldurchmesser;
$P_d$ ist Rollkreisdurchmesser; und
β ist Kontaktwinkel;

wobei das Verfahren weiter Folgendes umfasst:

Bestimmen des Frequenzspektrums der Vibrations-/akustischen Daten des Lagers durch Messen der Vibrations- oder akustischen Merkmale des Lagers und Umwandeln der Vibrations- und akustischen Signale in Spektralenergie unter Verwendung von einer von zwei Methoden:

a. Durchführen einer schnellen Fourier-Transformation der Vibrationsdaten, um die Spektraldaten zu extrahieren; oder
b. Durchführen eines laufenden Goertzel-Filters oder Bandpassfilters

an Echtzeitdaten, um die Spektraldaten zu extrahieren; und

Bestimmen, ob das überwachte Lager eine Veränderung der Magnitude der Spektralenergie bei den berechneten Schadfrequenzen aufweist.

2. Verfahren nach Anspruch 1, weiter umfassend den Schritt des Initiierens eines Alarms als Reaktion auf eine bestimmte Veränderung der Magnitude der Spektralenergie bei den Schadfrequenzen.

3. Verfahren nach Anspruch 2, wobei der Schritt des Bestimmens eines Schwellenwerts zum Auslösen eines Alarms durch Vergleich der Spektralenergie bei einer Schadfrequenz eines neuen Lagers bestimmt wird.

4. Verfahren nach Anspruch 2, wobei statistische Analyse verwendet wird, um festzustellen, ob die Veränderung der Spektralenergie bei einer Schadfrequenz auf einen Lagerdefekt zurückzuführen ist und nicht auf ein stationäres Signal.

5. Verfahren nach Anspruch 1, wobei eine Vielzahl von Lagern überwacht wird, um eine Veränderung der Magnitude der Spektralenergie bei mindestens einer der Schadfrequenzen zu bestimmen.

6. Verfahren nach Anspruch 1, wobei die Veränderung eine Zunahme ist.

7. Förderersystem, umfassend:

eine erste Bandrolle (102, 104, 106), die mindestens ein Lager umfasst;
einen Rotationsgeschwindigkeitssensor;
Rechenlogik; und
einen Signalprozessor;
wobei der Rotationsgeschwindigkeitssensor so angepasst ist, dass er die Rotationsgeschwindigkeit der Bandrolle (102, 104, 106) misst;
wobei die Rechenlogik so angepasst ist, dass sie mindestens eine oder mehrere Schadfrequenzen für das mindestens eine Lager gemäß einer oder einer Kombination der nachstehenden Gleichungen bestimmt:

$$FTF - \frac{1}{2} f_r \left(1 - \frac{B_d}{P_d} cos\beta\right);$$

$$BSF = \frac{P_d}{B_d} f_r [1 - (\frac{B_d}{P_d} cos\beta)^2];$$

$$BFPO = \frac{n}{2} f_r (1 - \frac{B_d}{P_d} cos\beta);$$

und

$$BPFI = \frac{n}{2} f_r (1 + \frac{B_d}{P_d} cos\beta);$$

wobei die vorstehenden Lagerparameter folgendermaßen definiert sind:

FTF ist Stoßgrundfrequenz;
BSF ist Kugelrollfrequenz;
BPFO ist Kugelpassfrequenz im Außenring;
BPFI ist Kugelpassfrequenz im Innenring;
n ist Anzahl der Kugeln oder Rollen;
$f_r$ ist Rotationsfrequenz des Lagers;
$B_d$ ist Kugeldurchmesser;
$P_d$ ist Rollkreisdurchmesser; und
$\beta$ ist Kontaktwinkel;

und wobei der Signalprozessor so angepasst ist, dass er:

das Frequenzspektrum der Vibrations-/akustischen Daten des Lagers durch Messen der Vibrations- oder akustischen Merkmale des Lagers und Umwandeln der Vibrations- und akustischen Signale in Spektralenergie unter Verwendung von einer von zwei Methoden bestimmt:

a. Durchführen einer schnellen Fourier-Transformation der Vibrationsdaten, um die Spektraldaten zu extrahieren; oder
b. Durchführen eines laufenden Goertzel-Filters oder Bandpassfilters an Echtzeitdaten, um die Spektraldaten zu extrahieren; und

zu bestimmen, ob das überwachte Lager eine Veränderung der Magnitude der Spektralenergie bei den berechneten Schadfrequenzen aufweist.

**Revendications**

1. Procédé de surveillance d'un roulement (58) d'un galet porteur (102, 104, 106) d'un convoyeur pour un défaut anticipé, le procédé étant **caractérisé par** les étapes consistant à :

mesurer la vitesse de rotation du galet porteur ;
déterminer une ou plusieurs fréquences de défaut pour l'au moins un roulement (58) en fonction d'une équation suivante quelconque ou d'une quelconque combinaison des équations suivantes :

$$FTF - \frac{1}{2} f_r (1 - \frac{B_d}{P_d} cos\beta);$$

$$BSF = \frac{P_d}{B_d} f_r [1 - (\frac{B_d}{P_d} cos\beta)^2];$$

$$BFPO = \frac{n}{2} f_r (1 - \frac{B_d}{P_d} cos\beta);$$

et

$$BPFI = \frac{n}{2} f_r \left(1 + \frac{B_d}{P_d} cos\beta\right);$$

dans lequel les paramètres de roulement précédents sont définis de la manière suivante :

FFT est une fréquence de train fondamentale ;
BSF est une fréquence de rotation de bille ;
BPFO est une fréquence de passage de bille de course externe ;
BPFI est une fréquence de passage de bille de course interne ;
n est un nombre de billes ou de rouleaux ;
$f_r$ est une fréquence de rotation du roulement ;
$B_d$ est un diamètre de bille ;
$P_d$ est un diamètre sur flancs ; et
$\beta$ est un angle de contact ;

le procédé comprenant en outre :
une détermination du spectre de fréquences des données de vibration/acoustiques du roulement en mesurant les caractéristiques de vibration/acoustiques du roulement et une transformation des signaux de vibration et acoustiques en énergie spectrale en utilisant l'une des deux méthodes :

a. une exécution d'une transformée de Fourier rapide sur des données de vibration pour extraire les données spectrales ; ou
b. une exécution d'un filtre de Goertzel ou d'un filtre passe-bande en cours d'exécution sur des données en temps réel pour extraire les données spectrales ; et

une détermination de si le roulement surveillé présente un changement d'amplitude de l'énergie spectrale aux fréquences de défaut calculées.

2. Procédé selon la revendication 1, comprenant en outre l'étape consistant à initier une alarme en réponse à un changement d'amplitude déterminé de l'énergie spectrale aux fréquences de défaut.

3. Procédé selon la revendication 2, dans lequel l'étape de détermination d'un seuil pour déclencher une alarme est déterminée par comparaison de l'énergie spectrale à une fréquence de défaut d'un nouveau roulement.

4. Procédé selon la revendication 2, dans lequel une analyse statistique est utilisée pour déterminer si le changement dans l'énergie spectrale à une fréquence de défaut est dû à un défaut de roulement plutôt qu'à un signal stationnaire.

5. Procédé selon la revendication 1, dans lequel une pluralité de roulements sont surveillés pour déterminer un changement d'amplitude de l'énergie spectrale à au moins une des fréquences de défaut.

6. Procédé selon la revendication 1, dans lequel le changement est une augmentation.

7. Système convoyeur comprenant :

un premier galet porteur (102, 104, 106) comprenant au moins un roulement ;
un capteur de vitesse de rotation ;
une logique computationnelle ; et
un processeur de signaux ;
dans lequel le capteur de vitesse de rotation est adapté pour mesurer la vitesse de rotation du galet porteur (102, 104, 106) ;
dans lequel la logique computationnelle est adaptée pour déterminer au moins une ou plusieurs fréquences de défaut pour l'au moins un roulement en fonction d'une équation suivante quelconque ou d'une quelconque combinaison des équations suivantes :

$$FTF - \frac{1}{2}f_r(1 - \frac{B_d}{P_d}cos\beta);$$

$$BSF = \frac{P_d}{B_d}f_r[1 - (\frac{B_d}{P_d}cos\beta)^2];$$

$$BFPO = \frac{n}{2}f_r(1 - \frac{B_d}{P_d}cos\beta);$$

et

$$BPFI = \frac{n}{2}f_r(1 + \frac{B_d}{P_d}cos\beta);$$

dans lequel les paramètres de roulement précédents sont définis de la manière suivante :

FFT est une fréquence de train fondamentale ;
BSF est une fréquence de rotation de bille ;
BPFO est une fréquence de passage de bille de course externe ;
BPFI est une fréquence de passage de bille de course interne ;
n est un nombre de billes ou de rouleaux ;
$f_r$ est une fréquence de rotation du roulement ;
$B_d$ est un diamètre de bille ;
$P_d$ est un diamètre sur flancs ; et
$\beta$ est un angle de contact ;

et dans lequel le processeur de signaux est adapté pour :

déterminer le spectre de fréquences des données de vibration/acoustiques du roulement en mesurant les caractéristiques de vibration/acoustiques du roulement et transformer les signaux de vibration et acoustiques en énergie spectrale en utilisant l'une des deux méthodes :

a. exécuter une transformée de Fourier rapide sur des données de vibration pour extraire les données spectrales ; ou
b. exécuter un filtre de Goertzel ou un filtre passe-bande en cours d'exécution sur des données en temps réel pour extraire les données spectrales ; et

déterminer si le roulement surveillé présente un changement d'amplitude de l'énergie spectrale aux une ou plusieurs fréquences de défaut calculées.

**FIG. 1 – Prior Art**

**FIG. 2**

**FIG. 3**

**FIG. 4**

**FIG. 5**

**FIG. 6**

**FIG. 7**

**FIG. 8**

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011160650 A1
- AU 2014050246 W

- AU 2015900168

**Non-patent literature cited in the description**

- **TOBIAS SANDSTROM**. *Condition Monitoring of Ceramic Ball Bearings in an Engine Testing Dynamometer*, 30 April 2014